# EUROPÄISCHE PATENTSCHRIFT

(11) **EP 1 158 271 B1**
(45) Veröffentlichungstag und Bekanntmachung des Hinweises auf die Patenterteilung: **19.10.2005**
(21) Anmeldenummer: 01111099.6
(22) Anmeldetag: 09.05.2001
(51) Int. Cl.: G01C 15/00

(54) **Verfahren und Vorrichtung zur Realisierung eines Informations- und Datenflusses für geodätische Geräte**
Apparatus and means for implementing data flow and information flow in a geodetic instrument
Procédé et dispositif pour la mise en oeuvre d'un flux de données et d'informations

(30) Priorität: 20.05.2000 DE 10025110
(43) Veröffentlichungstag der Anmeldung: 28.11.2001
(73) Patentinhaber: Trimble Jena GmbH, 07745 Jena (DE)
(72) Erfinder: Marold, Thomas, 07747 Jena (DE); Seeber, Marcel, 51147 Köln (DE); Taege, Eyk, 99097 Erfurt (DE); Usbeck, Christian, 98554 Benshausen (DE)
(74) Vertreter: Niestroy, Manfred

(56) Entgegenhaltungen:
- DE-A- 3 628 350
- DE-A- 3 704 848
- US-A- 5 949 529

## Beschreibung

Die Erfindung betrifft ein Verfahren und eine Vorrichtung zur Realisierung eines Informations- bzw. Datenflusses für geodätische Geräte, insbesondere für Videovermessungsgeräte, wie beispielsweise digitale Videotachymeter.

Es ist bekannt, einen Theodoliten oder ein Tachymeter mit einem Bildsensor auszurüsten. Die DE 31 24 945 beschreibt einen Registriertheodolit mit Videokamera und Bildaufzeichnung. Dabei wird die Videokamera an den Theodolit anmontiert und zusammen mit ihrer zugehörigen Elektronik, einschließlich Monitor und Videorecorder, betrieben.

In der DE 195 28 465 wird ein Verfahren und eine Vorrichtung zur Signalauswertung beschrieben, welche jedoch lediglich auf die Erfassung der Lage einer Zielmarke durch Schwerpunktbildung seiner elektrischen Signale spezialisiert ist. Eine Bildanzeige ist hierbei nicht vorgesehen.

Der Gegenstand des DE- GM 90 07 731 ist ein Winkel- und Entfernungsmeßgerät mit zwei aufgesetzten Videokameras zur Grob- und Feinanzielung von Hand durch Fernsteuerung. Das Bild wird auf einem Monitor eines über ein Kabel mit dem Meßgerät verbundenen Bediengerätes angezeigt, wobei das Meßgerät vom Bediengerät aus ferngesteuert wird.

In der US 4 682 218 wird ein Videovermessungsgerät beschrieben, bei dem das Bild unabhängig von der Fernrohrstellung betrachtet werden kann, indem es auf einem an der Stütze angeordneten Display angezeigt wird. Es ist eine Elektronik vorgesehen, die zur Ansteuerung des Displays dient. Eine Bildverarbeitung ist nicht bei diesem Gerät vorgesehen.

In der US 5 657 003 wird ein Bauwerksüberwachungssystem mit Videotechnik beschrieben. Ein Laserstrahlprojektor projiziert einen Lichtfleck auf das zu überwachende Bauwerk. Eine exzentrisch dazu aufgestellte Videokamera überwacht die Position des Lichtflecks. Die Bildverarbeitung erfolgt extern in einem Rechner. Nachteilig ist hier, daß mehrere Geräte aufgestellt, zueinander angeordnet und miteinander verkabelt werden müssen, damit die ganze Einrichtung funktionsfähig ist, bzw. den Informations- und Datenfluß so zu gestalten, daß eine Fernbedienung mit den gleichen Funktionsmerkmalen möglich ist.

DE 3 628 350 beschreibt eine Tachymetrieanordnung mit einem eine Sucheroptik umfassenden Tachymeter, an dessen elektrischen Datenausgang eine Datenspeichereinrichtung angeschlossen ist und einem Tachymeter-Zielkörper.

Es ist deshalb die Aufgabe der Erfindung, die Nachteile des Standes der Technik zu beseitigen und den Informations- und Datenfluß in einem geodätischen Gerät mit integrierter Elektronik so zu gestalten, daß die bei den Messungen anfallenden Daten innerhalb Gerätes verteilt, verarbeitet und dargestellt werden können, und daß eine Fernbedienung mit den gleichen Funktionsmerkmalen ermöglicht wird.

Erfindungsgemäß wird diese Aufgabe bei einem Verfahren zur Realisierung eines Informations- und Datenflusses mit den Mitteln des ersten Patentanspruchs gelöst. Eine entsprechende Einrichtung zur Durchführung des Verfahrens ist im vierten Anspruch offenbart. In den weiteren Ansprüchen sind Einzelheiten und weitere Ausführungen der Erfindung dargelegt.

So ist es vorteilhaft, wenn zur Aufnahme und Verarbeitung von Daten bei dem Verfahren mindestens zwei verschiedene Betriebsmodi im Gerät realisiert werden, wobei ein erster Betriebsmodus zur Orientierung (Ausrichtung) des Gerätes auf ein Ziel und ein zweiter Betriebsmodus zu Messungen im aufgenommenen Bild verwendet (benutzt) werden. Hierbei kann im ersten Modus durch eine Livebilddarstellung der Beobachter das Ziel visuell anzielen. Beispielsweise kann im zweiten Betriebsmodus die Ablage einer Zielmarke zu der kalibrierten Zielachse des Videotachymeters bestimmt werden.

Weiterhin ist es von Vorteil gemäß einer weiteren Ausgestaltung des Verfahrens, wenn die Bilddaten synchron vom Kameramodul und vom Applikationsmodul zum Anzeigesteuermodul übertragen werden und im Anzeigesteuermodul die Einblendung von Zusatzinformationen in die Bilddarstellung durchführt wird.

Die Einrichtung zur Realisierung eines Informations- und/oder Datenflusses für geodätische Geräte mit Bildverarbeitung umfaßt mehrere Funktionsgruppen, welche im geodätischen Gerät an durch dessen konstruktiven Aufbau bedingten Stellen angeordnet sind. Diese Funktionsgruppen sind aus mehreren Funktionsmodulen zusammengesetzt, welche zu mindestens teilweise in Hardware in Form von entsprechend ausgestalteten Baugruppen im Gerät realisiert sind. Die Funktionsmodule können auch zumindest teilweise in Software für das Gerät implementiert sind, wobei die in Software implementierten Funktionsmodule mindestens einer entsprechenden Hardware zugeordnet sind. So können beispielsweise der Bildverarbeitungs- und der Steuermodul als Software in einem gemeinsamen Rechner implementiert sein.

Eine vorteilhafte Ausführung ergibt sich, wenn eine erste Funktionsgruppe als Funktionsmodule einen Kameramodul, einen Bildvorverarbeitungsmodul und eine Datensendeeinrichtung umfaßt. Vorteilhaft ist es auch im Sinne einer kompakten Bauweise der Einrichtung, wenn die erste Funktionsgruppe im Fernrohrkörper des geodätischen Gerätes angeordnet ist.

Im Sinne einer vorteilhaften Aufgliederung der Funktionsgruppen ist es günstig, wenn eine zweite Funktionsgruppe als Funktionsmodule eine Datenempfangseinrichtung DE, einen Steuermodul STM, einem Bildverarbeitungsmodul BVM und einen Bildspeicher BSE umfaßt.

So ist es schließlich ebenfalls vorteilhaft, wenn eine dritte Funktionsgruppe als Funktionsmodule einen Anzeigeansteuermodul AAM, einen Bildanzeigemodul BAM, einen Applikationsmodul APM und ein Dateneingabegerät DEG umfaßt.

Die Erfindung soll nachstehend an einem Ausführungsbeispiel näher erläutert werden. In der zugehörigen Zeichnung zeigen
Fig. 1 stark vereinfacht ein geodätisches Gerät,
Fig. 2 eine Ausführung der Erfindung und
Fig. 3 eine weitere Ausführung der Erfindung.

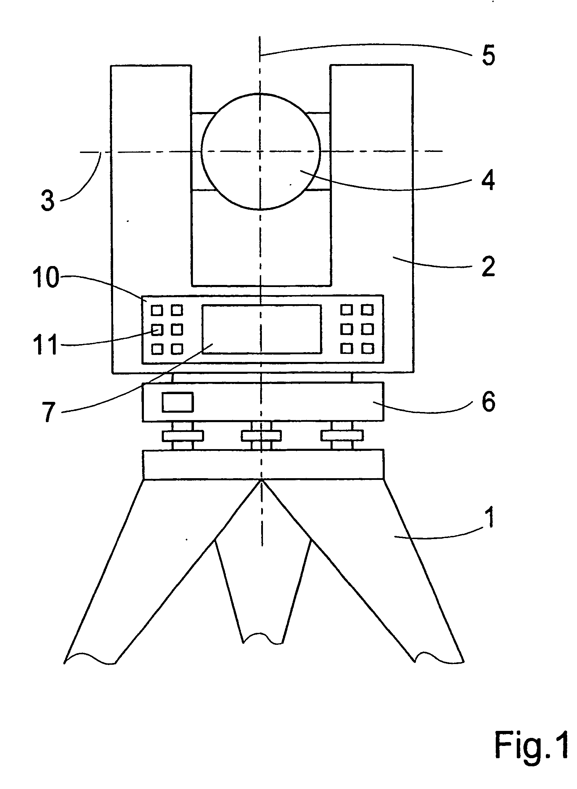

In Fig. 1 ist ein geodätisches Gerät, z. B. ein Videotheodolit oder -tachymeter auf einem Stativ 1 dargestellt, welches einen in der Stütze 2 um eine horizontale Kippachse 3 schwenkbar gelagerten Fernrohrkörper 4 umfaßt. Das gesamte geodätische Gerät ist um eine vertikale Stehachse 5 drehbar auf einem Grundkörper 6 gelagert. Im unteren Teil des Gerätes ist vorteilhaft eine Displayeinheit 7 vorgesehen.

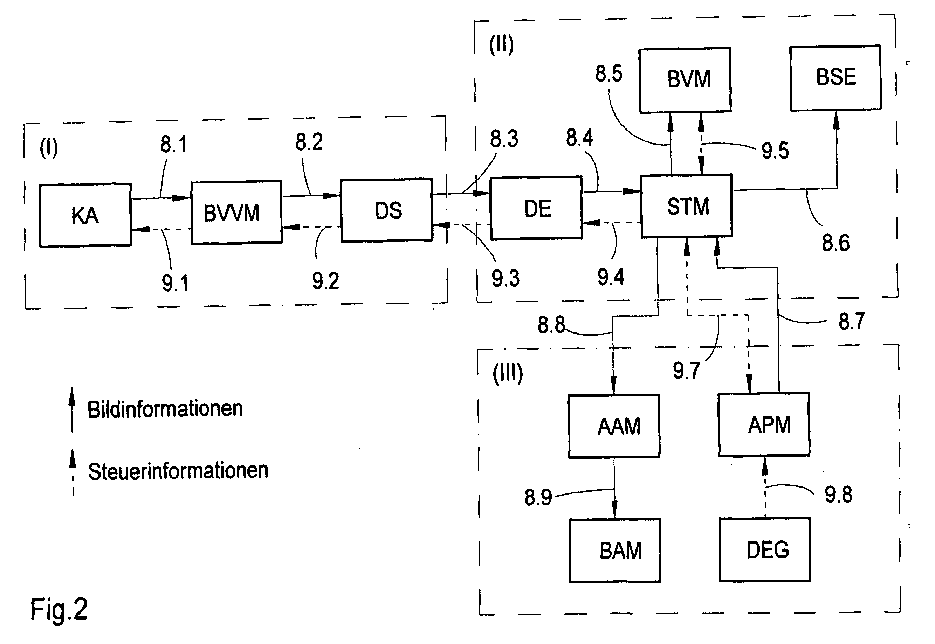

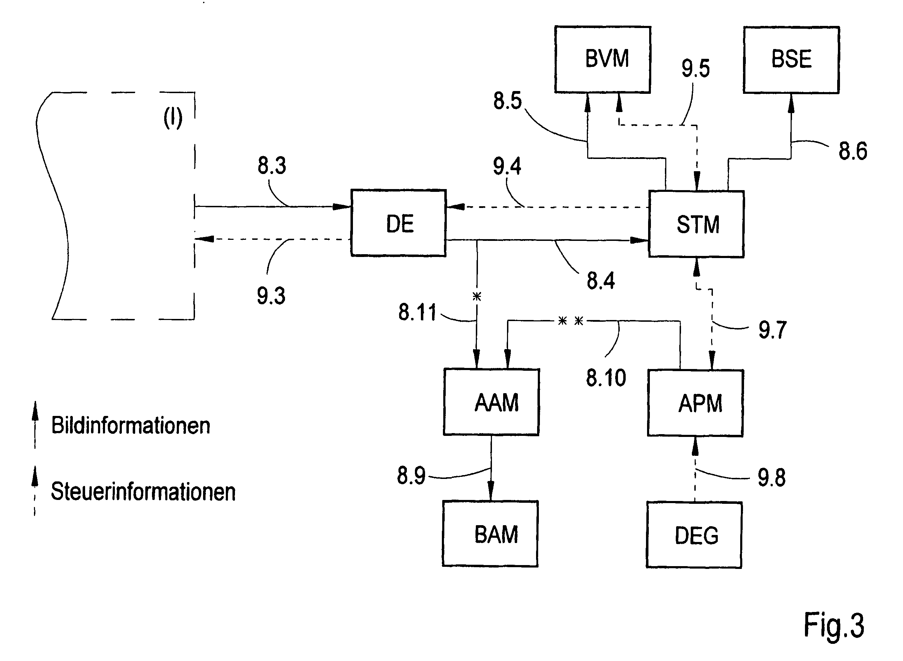

In der Fig. 2 ist eine Funktionsgruppe (I) dargestellt, die aus den Funktionsmodulen Kameramodul oder Kamera KA, Bildvorverarbeitungsmodul BVVM und Datensendeeinrichtung DS besteht. Diese Funktionsmodule sind über Datenleitungen 8 (in den Figuren 2 und 3 als ausgezogene Linie gekennzeichnet) und Steuerleitungen 9 (in den Figuren 2 und 3 als gestrichelte Linien gekennzeichnet) miteinander verbunden, die auch in Form eines bidirektionalen Busses angeordnet sein können. Die Datenleitungen 8 übertragen die Bildinformationen, die Steuerleitungen 9 Kommandos an die Funktionsmodule. Zweckmäßigerweise und aus Gründen einer kompakten Bauweise sind diese Funktionsmodule im Fernrohrkörper 4 des in Fig. 1 dargestellten geodätischen Gerätes angeordnet.

Das Funktionsmodul Kamera KA umfaßt dabei alle Elemente zur elektrooptischen Aufnahme eines durch ein im Fernrohrkörper 4 angeordnetes optisches Abbildungssystem (nicht dargestellt) in den Bildraum projizierten Gegenstandsraumes. Dazu gehören neben dem elektrooptischen Empfänger, z.B. einer CCD-Matrix in der Bildebene des optischen Systems, alle optisch-mechanischen sowie elektrischen Einrichtungen, um das Bild bzw. Bildausschnitte fokussiert abzubilden, d.h. im wesentlichen eine optisches Abbildungssystem mit einer Fokussier- und Zoomeinrichtung. Da die optisch-mechanischen Einrichtungen an sich bekannt sind, sind sie nicht detailliert in den Figuren dargestellt.

Das Funktionsmodul Bildvorverarbeitung BVVM, das über eine Datenleitung 8.1 mit dem Kameramodul KA verbunden ist, realisiert die Ansteuerung des Kameramoduls KA über eine Steuerleitung 9.1 und die Einstellung eines elektronischen Zooms, d.h. die Auswahl eines bestimmten Bildausschnittes für die weitere Datenübertragung. Weiterhin gewährleistet dieses Funktionsmodul BVVM eine Vorverarbeitung von Bilddaten in der Weise, daß zwecks Datenstromreduzierung eine Komprimierung der Daten vorgenommen wird. Der dabei angewendete Algorithmus stellt sicher, daß die für eine nachfolgende Bildverarbeitung relevanten Informationen nicht verlorengehen. Somit wird für die Bildauswertung eine von Verlusten freie Komprimierung der Daten erreicht.

Für die Bilddarstellung auf dem später beschriebenen Bildanzeigemodul BAM kann bei Bedarf jedoch auch eine verlustbehaftete Komprimierung unter Erhaltung relevanter Bildinformationen realisiert werden.

Eine Datensendeeinrichtung DS, welche durch eine Steuerleitung 9.2 und durch eine Datenleitung 8.2 mit dem BVVM verbunden und dieser nachgeordnet ist, überträgt die Bilddateninformationen über ein geeignetes Bussystem über die Datenleitung 8.3 zur Datenempfangseinrichtung DE der Funktionsgruppe (II) und realisiert damit die elektronische Kopplung und Verbindung zwischen Anordnungen, welche im Fernrohrkörper 4 und in der Stütze 2 des geodätischen Gerätes liegen. Gleichfalls sind die DS und die DE über entsprechende Steuerleitungen 9.3 miteinander verbunden.

Die Funktionsgruppe (II), die vorteilhaft in der Stütze 2 des Gerätes, z. B. eines Videotachymeters, angeordnet ist, umfaßt u. a. die Funktionsmodule Datenempfangseinrichtung DE, Steuermodul STM, Bildverarbeitungsmodul BVM und einen Bildspeicher BSE. Diese genannten Funktionsmodule sind über Datenleitungen 8.4; 8.5; 8.6 und Steuerleitungen 9.3; 9.5; 9.6 entsprechend miteinander verbunden, wie es der Fig. 2 zu entnehmen ist. Die Datenempfangseinrichtung DE realisiert von der Seite der Stütze 2 her die elektronische Kopplung und Verbindung zwischen dem Fernrohrkörper 4 und der Stütze 2. Das Steuermodul STM ist über die Datenleitungen 8.4; 8.5 und 8.6 und die Steuerleitungen 9.4; 9.5 und 9.6 mit allen anderen Funktionsmodulen in der Funktionsgruppe (II) und über die Datenleitungen 8.7 und 8.8 und die Steuerleitung 9.7 auch mit den der Funktionsgruppe III zugeordneten Funktionsmodulen verbunden.

Die dritte Funktionsgruppe (III) umfaßt die Funktionsmodule Anzeigeansteuermodul AAM, Bildanzeigemodul BAM, Applikationsmodul APM und das Dateneingabegerät DEG, die wiederum, wie in Fig. 2 dargestellt, über Datenleitungen und Steuerleitungen miteinander verbunden sind. So ist das Anzeigeansteuermodul AAM einerseits durch die Datenleitung 8.8 mit dem Steuermodul STM und andererseits durch die Datenleitung 8.9 mit einem Bildanzeigemodul BAM verbunden. Das Applikationsmodul APM ist durch die Datenleitung 8.7 und eine Steuerleitung 9.7 mit dem STM und durch eine Steuerleitung 9.8 mit dem Dateneingabegerät DEG verbunden. Die Daten- und Steuerleitungen 8.7; 8.8 sowie 9.7 realisieren die Verbindung zwischen der Funktionsgruppen (II) und (III).

Die Funktionsgruppe (III) ist am Gerät vorteilhafterweise in Form eines Bedienpultes 10 angebracht. Im Prinzip kann sie auch vom Gerät getrennt angeordnet sein und über Kabel oder eine hier nicht dargestellte drahtlose Verbindung mit den anderen Funktionsgruppen (I) und (II) verbunden sein.

Die Einrichtung arbeitet in der im folgenden beschriebenen Weise, wobei mindestens zwei verschiedene Betriebsmodi realisiert werden.

In einem ersten Betriebsmodus wird das Videosignal über die entsprechenden Datenleitungen von der Kamera KA durch die Datenleitungen 8.1; 8.2; 8.3: 8.4; 8.8 und 8.9 über die Funktionsmodule Bildvorverarbeitungsmodul BVVM, Datensendeeinrichtung DS, Datenempfangseinrichtung DE, Steuermodul STM und Anzeigeansteuermodul AAM direkt in Echtzeit zum Bildanzeigemodul BAM durchgegeben, wobei durch den STM im BVVM eine verlustbehaftete Komprimierung ausgewählt sein kann. Dieser Modus dient zur Orientierung des Instrumentes, das bedeutet, durch eine Livebilddarstellung kann der Beobachter das Ziel visuell anzielen.

Der zweite Betriebsmodus realisiert eine Messung im Bild, d.h. die Aufnahme und die Verarbeitung der Bilddaten in der Weise, daß die gewonnenen Bilddaten dazu verwendet werden, im Bildverarbeitungsmodul BVM die Lage eines Zielpunktes und/oder verschiedener Zielmarken, einschließlich Reflektoren, zu einer kalibrierten Zielachse zu bestimmen und diese rechnerisch an einen gemessenen Winkelwert anzuschließen. Dazu werden vom Steuermodul STM aus für das Bildvorverarbeitungsmodul BVVM eine verlustfreie Komprimierung von Daten vorgegeben und die Bilddaten, vorzugsweise von einem Einzelbild oder von mehreren Einzelbildern vom STM an das BVM weitergegeben. Im BVM werden mit an sich bekannten Algorithmen der Bildverarbeitung zum Beispiel geeignete geometrische Objekte (Punkte, Kanten, Flächen) aus dem Bild extrahiert, ihre Koordinaten im Bild bestimmt und interpoliert. Somit kann die Ablage (Abweichung) einer Zielmarke zu einer kalibrierten Zielachse des Gerätes, beispielsweise Videotachymeters oder Theodolites bestimmt werden.

Rechenwerte des Bildverarbeitungsmoduls BVM und Markierungen extrahierter geometrischer Objekte werden zum Zwecke der Verrechnung mit anderen gemessenen Werten, zum Beispiel Winkel- und Streckenwerten, die in einer für Tachymeter bekannten Weise bestimmt werden, an das Steuermodul STM über die Steuerleitung 9.5 zurückgegeben. Zur Darstellung im Bildanzeigemodul BAM können gemessene und berechnete Daten, z. B. Strichkreuz und/oder Maßstäbe im STM zu den Bilddaten von der Kamera KA addiert und gemeinsam als Überlagerung (Overlay) des Bildes oder in getrennten Bereichen im BAM dargestellt und angezeigt werden.

Die in der Funktionsgruppe I gewonnenen Bilddaten können außerdem zur Speicherung vom Steuermodul STM an einen Bildspeicher BSE weitergeleitet werden, womit eine vollständige Dokumentation des gesamten Meßprozesses ermöglicht wird.

Die Funktionsgruppe (III), die z. B. in einem Bedienpult 10 untergebracht werden kann, erweitert das System um eine mögliche Schnittstelle, da die hierin angeordneten Funktionsmodule AAM; BAM; APM und die Dateneingabeeinheit DEG sowohl innerhalb, als auch außerhalb eines Videotachymeters realisiert werden können. Damit ist das Darstellen von Bilddaten, das Bedienen des geodätischen Gerätes sowie das Ausführen von geodätischen Applikationen sowohl auf einem eingebautem (embedded) PC als auch auf einem externem Feldrechner möglich. Die DEG umfaßt dabei neben einer Tastatur 11 auch die Anordnung einer berührungsempfindlichen Bildschirmmaske 12 (Touchscreen), welche in Verbindung mit dem Bildanzeigemodul BAM vorteilhaft zum Einsatz kommen kann.
Bei der in Fig. 3 dargestellten weiteren Ausführungsform des erfindungsgemäßen Systems sind der Steuermodul STM, Applikationsmodul APM, Anzeigeansteuermodul AAM und Bildverarbeitungsmodul BVM so über einen gemeinsamen Bus verbunden, in welchem sich die Steuerleitungen 9.5 und 9.7 sowie die Datenleitungen 8.4; 8.5; 8.10 und 8.11 zusammengeführt sind. Bilddaten vom in Fig. 3 nicht dargestellten, in der Funktionsgruppe (I) angeordneten Kameramodul KA werden über die Datenempfangseinrichtung DE und die Datenleitung 8.11 und in diese einzublendende Daten vom Applikationsmodul APM über die Datenleitung 8.10 synchron zum Anzeigeansteuermodul AAM übertragen.

Mit einer einfachen Logik, welche durch das Anzeigeansteuermodul AAM realisiert ist, wird eine Overlaydarstellung ermöglicht, d.h. es werden zusätzliche Informationen, wie Meßwerte, in die Bilddaten eingeblendet. Das wird realisiert, indem an den Stellen des Bildes, die durch den APM mit Informationen belegt sind, der von der Kamera KA stammende Bildinhalt ausgeblendet wird. Dazu sind keine Zwischenspeicherung kompletter Bildinhalte und eine aufwendige Verrechnung der Bilddaten notwendig. Durch diese Logik werden aus den empfangenen vom Kameramodul KA und vom Applikationsmodul APM stammenden Bilddaten das anzuzeigende Bild für jede empfangene Bildpunktinformation zusammengesetzt und diese unmittelbar nach dieser Operation zum Bildanzeigemodul (BAM) übertragen.

Das Bildverarbeitungsmodul BVM empfängt im gleichen Zeittakt die Bilddaten von der Kamera KA über das Steuermodul STM und übernimmt immer dann ein Bild in seinen zur Verrechnung notwendigen internen Bildspeicher, wenn eine Bildverarbeitungsoperation auf ein neues Bild angewendet werden soll, d.h. das Bildverarbeitungsmodul BVM und das Steuermodul STM stellen im Daten- bzw. Informationsfluß bezüglich der Bilddaten einen Slave dar, da Bilddaten nicht aktiv angefordert werden. Das Konzept ist somit auf eine isochrone Übertragung und Darstellung von Bilddaten zugeschnitten.

## Patentansprüche

1. Verfahren zur Realisierung eines Informations- und/oder Datenflusses in einem geodätischen Gerät mitmehreren im Gerät angeordneten, Funktionsmodule umfassenden Funktionsgruppen zur elektrooptischen Aufnahme von Bildern und zur Bildverarbeitung,
**dadurch gekennzeichnet, daß**
- der zur Bildverarbeitung notwendige Daten- und Informationsfluß auf die Funktionsmodule (FM) umfassenden Funktionsgruppen (FGI; FGII; FGIII) *so* aufgeteilt und durch diese Funktionsgruppen (FGI; FGII; FGIII) realisiert wird, daß
- mindestens zwei verschiedene Betriebsmodi im Gerät realisiert werden, wobei ein erster Betriebsmodus zur Ausrichtung des Gerätes auf ein Ziel und ein zweiter Betriebsmodus zu Messungen im aufgenommenen Bild verwendet wird.

2. Verfahren nach Anspruch 1, **dadurch gekennzeichnet, daß** Bilddaten synchron vom Kameramodul und vom Applikationsmodul zum Anzeigesteuermodul übertragen werden und im Anzeigesteuermodul die Einblendung von Zusatzinformationen in die Bilddarstellung durchführt wird.

3. Einrichtung zur Realisierung eines Informations- und/oder Datenflusses für geodätische Geräte mit mehreren im Gerät angeordneten, Funktionsmodule umfassenden Fanktionsgruppen zur elektrooptischen Aufnahme von Bildern und zur Bildverarbeitung, **dadurch gekennzeichnet, daß**
- mehrere Funktionsgruppen (FGI; FGII; FGIII) vorgesehen sind, welche im Gerät an durch dessen konstruktiven Aufbau bedingten Stellen angeordnet sind, wobei diese Funktionsgruppen (FGI; FGII; FGIII) jeweils aus mehreren Funktionsmodulen (FM) zusammengesetzt sind, und
- Einrichtungen zur Realisierung von mindestens zwei verschiedenen Betriebsmodi im Gerät vorhanden sind, wobei ein erster Betriebsmodus zur Ausrichtung des Gerätes auf ein Ziel und ein zweiter Betriebsmodus zu Messungen im aufgenommenen Bild vorgesehen ist.

4. Einrichtung nach Anspruch 3, **dadurch gekennzeichnet, daß** die Funktionsmodule mindestens teilweise in Hardware in Form von entsprechend ausgestalteten Baugruppen im Gerät realisiert sind.

5. Einrichtung nach Anspruch 3, **dadurch gekennzeichnet, daß** die Funktionsmodule mindestens teilweise in Software für das Gerät implementiert sind, wobei die in Software implementierten Funktionsmodule mindestens einer Hardware zugeordnet sind.

6. Einrichtung nach einem der Ansprüche 3 bis 5, **dadurch gekennzeichnet, daß** eine erste Funktionsgruppe (FGI) ein Kameramodul, ein Bildvorverarbeitungsmodul und eine Datensendeeinrichtung umfaßt.

7. Einrichtung nach Anspruch 6, **dadurch gekennzeichnet, daß** die erste Funktionsgruppe (FGI) im Fernrohrkörper (4) des geodätischen Gerätes angeordnet ist.

8. Einrichtung nach einem der Ansprüche 3 bis 6, **dadurch gekennzeichnet, daß** eine zweite Funktionsgruppe (FGII) eine Datenempfangseinrichtung DE, ein Steuermodul STM, ein Bildverarbeitungsmodul BVM und einen Bildspeicher BSE umfaßt.

9. Einrichtung nach Anspruch 8, **dadurch gekennzeichnet, daß** die zweite Funktionsgruppe (FGI) in der Stütze (2) des geodätischen Gerätes angeordnet ist.

10. Einrichtung nach einem der Ansprüche 3 bis 6, **dadurch gekennzeichnet, daß** eine dritte Funktionsgruppe (FGIII) ein Anzeigeansteuermodul AAM, ein Bildanzeigemodul BAM, einen Applikationsmodus APM und ein Dateneingabegerät DEG umfaßt.

## Claims

1. Method of implementing a flow of information and/or data in a geodetic instrument with a plurality of functional groups which comprise functional modules and are disposed in the instrument for electro-optical recording of images and for image processing, **characterised in that**
- the flow of data and information is distributed over the functional groups (FGI; FGII; FGIII) comprising the functional modules (FM) and is implemented by these functional groups (FGI; FGII; FGIII) in such a way that
- at least two different modes of operation are implemented in the instrument, a first mode of operation being used for orientation of the instrument with respect to a target and a second mode of operation being used for measurements in the recorded image.

2. Method as claimed in Claim 1, **characterised in that** image data are transmitted synchronously from the camera module and from the application module to the display control module and additional information is faded into the image display in the display control module.

3. Apparatus for implementing a flow of information and/or data in a geodetic instrument with a plurality of functional groups which comprise functional modules and are disposed in the instrument for electro-optical recording of images and for image processing, **characterised in that**
- a plurality of functional groups (FGI; FGII; FGIII) are provided which are disposed in the instrument at locations determined by the construction and design of the instrument, these functional groups (FGI; FGII; FGIII) being composed in each case of a plurality of functional modules (FM), and
- means for implementing at least two different modes of operation are provided in the instrument, a first mode of operation being used for orientation of the instrument with respect to a target and a second mode of operation being used for measurements in the recorded image.

4. Apparatus as claimed in Claim 3, **characterised in that** the functional modules are implemented in the instrument at least in part in hardware in the form of correspondingly configured assemblies.

5. Apparatus as claimed in Claim 3, **characterised in that** the functional modules are implemented at least in part in software for the instrument, wherein the functional modules implemented in software are associated with at least one hardware device.

6. Apparatus as claimed in any one of Claims 3 to 5, **characterised in that** a first functional group (FGI) comprises a camera module, an image pre-processing module and a data transmission device.

7. Apparatus as claimed in Claim 6, **characterised in that** the first functional group (FGI) is disposed in the telescope body (4) of the geodetic instrument.

8. Apparatus as claimed in any one of Claims 3 to 6; **characterised in that** a second functional group (FGII) comprises a data reception device (DE), a control module (STM), an image processing module (BVM) and an image store (BSE).

9. Apparatus as claimed in Claim 8, **characterised in that** the second functional group (FGII) is disposed in the support (2) of the geodetic instrument.

10. Apparatus as claimed in any one of Claims 3 to 6, **characterised in that** a third functional group (FGIII) comprises a display control module (AAM), an image display module (BAM), an application module (APM) and a data input device (DEG).

## Revendications

1. Procédé de réalisation d'un flux d'informations et/ou de données dans un appareil géodésique avec plusieurs groupes fonctionnels englobant des modules fonctionnels disposés dans l'appareil pour la prise de vue électrooptique d'images et le traitement d'images
**caractérisé en ce que**
le flux de données et d'informations nécessaire au traitement des images est réparti sur les groupes fonctionnels (FGI ; FGII ; FGIII) englobant les modules fonctionnels (FM) et réalisé par ces groupes fonctionnels (FGI ; FGII ; FGIII) de telle sorte que
au moins deux modes d'exploitation différents sont réalisés dans l'appareil, un premier mode d'exploitation étant utilisé pour le pointage de l'appareil sur une cible et un deuxième mode d'exploitation pour les mesures dans l'image prise.

2. Procédé selon la revendication 1, **caractérisé en ce que** les données de l'image sont transférées de manière synchrone par le module caméra et le module d'application au module de commande de visualisation et que l'incrustation d'informations complémentaires dans la représentation de l'image est réalisée dans le module de commande de visualisation.

3. Dispositif de réalisation d'un flux d'informations et/ou de données pour des appareils géodésiques avec plusieurs groupes fonctionnels englobant des modules fonctionnels disposés dans l'appareil pour la prise de vue électrooptique d'images et le traitement d'images,
**caractérisé en ce que**
- plusieurs groupes fonctionnels (FGI ; FGII ; FGIII) sont prévus et disposés dans l'appareil à des emplacements déterminés par sa réalisation constructive, ces groupes fonctionnels (FGI ; FGII ; FGIII) étant composés chacun de plusieurs modules fonctionnels (FM), et
- l'appareil contient des dispositifs pour la réalisation d'au moins deux modes de fonctionnement différents, un premier mode d'exploitation étant utilisé pour le pointage de l'appareil sur une cible et un deuxième mode d'exploitation pour les mesures dans l'image prise.

4. Dispositif selon la revendication 3, **caractérisé en ce que** les modules fonctionnels sont au moins partiellement réalisés dans l'appareil matériellement sous la forme de modules de construction appropriée.

5. Dispositif selon la revendication 3, **caractérisé en ce que** les modules fonctionnels sont au moins partiellement implémentés dans le logiciel destiné à l'appareil, les modules fonctionnels implémentés dans le logiciel étant affectés à au moins un matériel.

6. Dispositif selon l'une quelconque des revendications 3 à 5, **caractérisé en ce qu'**un premier groupe fonctionnel (FGI) contient un module caméra, un module de prétraitement de l'image et un dispositif de transmission de données.

7. Dispositif selon la revendication 6, **caractérisé en ce que** le premier groupe fonctionnel (FGI) est agencé dans le corps du télescope (4) de l'appareil géodésique.

8. Dispositif selon l'une quelconque des revendications 3 à 6, **caractérisé en ce qu'**un deuxième groupe fonctionnel (FGII) contient un dispositif de réception des données DE, un module de commande STM, un module de traitement de l'image BVM et une mémoire d'images BSE.

9. Dispositif selon la revendication 8, **caractérisé en ce que** le deuxième groupe fonctionnel (FGI) est agencé dans le support (2) de l'appareil géodésique.

10. Dispositif selon l'une quelconque des revendications 3 à 6, **caractérisé en ce qu'**un troisième groupe fonctionnel (FGIII) contient une module de commande de visualisation AAM, un module de visualisation d'image BAM, un module d'application APM et un appareil de saisie de données DEG.
